# EUROPÄISCHE PATENTSCHRIFT

(11) **EP 4 007 861 B1**
(45) Veröffentlichungstag und Bekanntmachung des Hinweises auf die Patenterteilung: **25.01.2023**
(21) Anmeldenummer: 20743982.9
(22) Anmeldetag: 15.07.2020
(51) Int. Cl.: F16G 15/02, F16G 15/12

(54) **KETTENGLIED**
CHAIN LINK
MAILLON DE CHAÎNE

(30) Priorität: 26.07.2019 DE 202019104124 U
(43) Veröffentlichungstag der Anmeldung: 08.06.2022
(73) Patentinhaber: J.D. Theile GmbH & Co. KG, D-58239 Schwerte (DE)
(72) Erfinder: WIRTZ, Torsten, 40723 Hilden (DE); KULMS, Fabian, 58239 Schwerte (DE)
(74) Vertreter: Haverkamp Patentanwälte PartG mbB
(86) Internationale Anmeldenummer: PCT/EP2020/069934
(87) Internationale Veröffentlichungsnummer: WO 2021/018576

(56) Entgegenhaltungen:
- US-B1- 7 389 634

## Beschreibung

Die Erfindung betrifft ein Kettenglied mit zwei an ihren Enden durch jeweils einen Bogen verbundenen Schenkeln, wobei die innere Länge des Kettengliedes ausgelegt ist, damit darin scharnierend an jedem Bogen ein weiteres Kettenglied eingehängt werden kann, wobei die Schenkel eine nach Art eines Doppel-T-Trägers ausgebildete Querschnittsgeometrie mit einem äu-ßeren Gurt, einem inneren Gurt und einem die Gurte verbindenden Steg aufweisen, wobei die Höhe dieser Doppel-T-Trägerstruktur in Richtung der Breite des Kettengliedes ausgerichtet ist.

Kettenglieder der vorstehend genannten Art werden beispielsweise bei orientiert eingebauten Ketten als Vertikalkettenglieder verwendet. Eingesetzt werden derartige Kettenglieder beispielsweise als Bestandteil von Stahlgliederketten, die typischerweise als Fördererketten etwa zum Betreiben von Kratzerförderern im untertägigen Kohlebergbau eingesetzt werden. Derartige Ketten sind vom Typ her Rundstahlgliederketten. Rundstahlgliederketten zeichnen sich durch eine ösenförmige Ausbildung der einzelnen Kettenglieder aus. Kratzerförderer bzw. Kettenkratzerförderer umfassen zumeist zwei umlaufende, motorisch angetriebene Fördererketten, an denen zwischen den Ketten erstreckende und die Ketten miteinander verbindende Kratzer befestigt sind. Im Betrieb werden die Kratzerfördererketten durch eine Förderrinne gezogen, wodurch der durch die Kratzer geförderte Abraum beispielsweise Kohle zu einer Verladestation gefördert wird. Zurückgeführt werden die Fördererketten mit den Kratzern in einem Untertrum.

Eine als Fördererkette konzipierte Stahlgliederkette mit als Vertikalglieder in Form von Flachkettengliedern ausgeführten Kettengliedern gemäß dem Oberbegriff des unabhängigen Anspruchs ist aus DE 103 48 491 B3 bekannt. Die Flachkettenglieder dieser vorbekannten Fördererkette verfügen zur Steigerung ihrer Bruchfestigkeit und damit zur Leistungssteigerung der Stahlgliederkette gegenüber diesbezüglich vorbekannten Kettengliedern bzw. damit hergestellten Stahlgliederketten über eine Ausbauchung im Bereich der Schenkel. Mithin weist dieses vorbekannte Flachkettenglied im Bereich seiner Schenkel eine größere Schenkelbreite auf als im Bereich seiner Bögen. Diese die maximale Schenkelbreite bildende Ausbauchung erstreckt sich bis in einen Übergangsbogenabschnitt der Bögen hinein und läuft dort aus. An den Übergangsbogenabschnitt grenzt ein sich über etwa 80 bis 100 Grad erstreckender Bogenabschnitt mit einer gleichbleibenden Querschnittsform und Querschnittsfläche. Die Querschnittsfläche dieses Bogenabschnittes ist kreisrund. Damit definiert dieser Bogenabschnitt mit seiner gleichbleibenden Querschnittsform und Querschnittsfläche den Nenndurchmesser dieses vorbekannten Flachkettengliedes. Der Nenndurchmesser eines Kettengliedes entspricht der Breite des Kettengliedes im Bereich seines Bogens, gemessen quer zur Längserstreckung des Kettengliedes. Mithin definiert der kleinste Durchmesser des vorbekannten Flachkettengliedes im Bereich seiner Bögen seinen Nenndurchmesser. Die Bogenabschnitte gleichbleibender Querschnittsform und Querschnittsfläche dienen der Scharnierbarkeit des Flachkettengliedes gegenüber einem in das Flachkettenglied eingehängten weiteren Kettenglied, das mit seiner Bogeninnenseite an diesem Bogenabschnitt des Flachkettengliedes scharniert.

Die aus DE 103 48 491 B3 bekannt gewordene Stahlgliederkette genießt aufgrund ihrer besonderen Standfestigkeit und Lebensdauer eine entsprechende Wertschätzung. Dieses ist auch darin begründet, dass die Flachkettenglieder aufgrund ihrer besonderen Konzeption trotz ihrer besonderen Bruch- und Standfestigkeit ein relativ geringes Gewicht aufweisen, verglichen mit anderen Kettengliedern gleichen Nenndurchmessers. Das geringere Gewicht dieser vorbekannten Flachkettenglieder liegt darin begründet, dass bei den Flachkettengliedern dieser vorbekannten Stahlgliederkette die Schenkel eine gegenüber der Querschnittsfläche im Bereich der den Nenndurchmesser definierenden Bogenbereiche reduzierte Querschnittsfläche aufweisen. Eine aus oder mit derartigen Kettengliedern hergestellte Rundstahlgliederkette, insbesondere wenn als Fördererkette konzipiert, unterliegt dynamischen Beanspruchungen. Hierzu zählt auch, dass sich die Schenkel von unter Zuglast stehenden Kettengliedern in Richtung zum Kettengliedinneren elastisch verformen. Um diesen Wechselbeanspruchungen Stand zu halten, müssen die Kettenglieder im Bereich der Schenkel eine hinreichende Querschnittsfläche aufweisen.

Ein weiteres Kettenglied als Teil einer Gliederkette ist aus US 7 389 634 B1 bekannt. Dieses vorbekannte Kettenglied weist in den Schenkeln und den die Schenkel verbindenden Bögen jeweils eine gleiche Querschnittsfläche auf. Umlaufend ist in dieses Kettenglied in seine beiden voneinander wegweisenden Flachseiten eine konkave Ausnehmung eingebracht. Aus diesem Grunde weisen die Schenkel eine nach Art eines Doppel-T-Trägers ausgebildete Querschnittsgeometrie auf. Gebildet ist diese durch einen äu-ßeren und einen inneren Gurt. Beide Gurte sind durch einen Steg miteinander verbunden, wobei die Höhe dieser Doppel-T-Trägerstruktur in Richtung der Breite des Kettengliedes ausgerichtet ist.

Auch wenn die Flachkettenglieder einer mit diesen hergestellten Stahlgliederkette besondere Eigenschaften verleihen, diese besonders sicher ist und eine hohe Bruchfestigkeit aufweist, besteht der Wunsch, diese vorbekannten Kettenglieder hinsichtlich ihres Gewichtes bei Beibehaltung der hohen Bruchfestigkeit zu verbessern, und somit das Eigengewicht dieser Kettenglieder zu reduzieren.

Somit liegt ausgehend von diesem Stand der Technik der Erfindung die Aufgabe zu Grunde, ein bereits gewichtsoptimiertes Kettenglied gemäß US 7 389 634 B1 vorzuschlagen, bei dem eine weitere Gewichtsreduzierung ohne jedenfalls nennenswerte Einbuße in den mechanischen Kennwerten eines solchen Kettengliedes hinnehmen zu müssen.

Gelöst wird diese Aufgabe erfindungsgemäß durch ein eingangs genanntes, gattungsgemäßes Kettenglied, bei dem die Schenkel eine geringere Querschnittsfläche aufweisen als die Querschnittsfläche im Bereich der Bögen, und bei dem zwischen den beiden Gurten ein Stützgurt vorgesehen ist, dessen Abstand zu dem äußeren Gurt, ausgehend von seinem zu einem Bogen weisenden Ende, zur Schenkelmitte hin durch eine geneigte Anordnung abnimmt oder zunimmt und diese somit zwei gegensinnig zueinander geneigte Stützgurtabschnitte aufweist.

Bei diesem Kettenglied ist die Querschnittsgeometrie der Schenkel nach Art eines Doppel-T-Trägers ausgeführt. Dieses bedeutet, dass die Schenkel von ihrer Querschnittsformgebung einen äußeren Gurt und einen von diesem beabstandeten inneren Gurt aufweisen. Die beiden Gurte sind mit einem Steg miteinander verbunden. Zwischen diesen beiden Gurten befindet sich ein zusätzlicher Stützgurt. Dieser verläuft in Längserstreckung des jeweiligen Schenkels geneigt in Bezug auf den äußeren Gurt und den inneren Gurt. Je nach Auslegung des Kettengliedes und seiner vorgesehenen Anwendung reduziert sich der Abstand des Stützgurtes zum äußeren Gurt in Richtung zur Schenkelmitte hin oder er nimmt in dieser Richtung ab. Damit ist der Stützgurt in zwei Stützgurtabschnitte unterteilt, die gegensinnig zueinander geneigt sind und im Bereich der Schenkelmitte ineinander übergehen. Zwischen den Stützgurtabschnitten und dem äußeren Gurt sowie dem inneren Gurt sind Taschen vorgesehen, mithin Abschnitte mit einer gegenüber der Breite der Gurte reduzierten Breite. Durch diese Taschen ist die Doppel-T-Trägerstruktur der Schenkel gebildet. Diese Doppel-T-Trägerstrukturausbildung der Schenkel erstreckt sich bezüglich ihrer Höhe in Richtung der Breite des Kettengliedes.

Durch die vorbeschriebene, als Doppel-T-Träger ausgeführte Stützstruktur der Schenkel des Kettengliedes kann die Querschnittsfläche jedes Schenkels gegenüber der Querschnittsfläche in den Bögen weiter reduziert werden. Grund hierfür ist die Ausbildung der Schenkel nach Art eines Doppel-T-Trägers in Verbindung mit der besonderen Ausgestaltung des zwischen diesen Gurten befindlichen Stützgurtes. In Folge der zwischen dem Stützgurt und dem äußeren Gurt bzw. dem inneren Gurt befindlichen Taschen wird für eine Realisierung dieses Kettengliedes weniger Material benötigt. In Folge dessen weist ein solches Kettenglied ein gegenüber einem Vergleichskettenglied, etwa einem solchen gemäß DE 103 48 491 B3 in seiner, Kettenausgestaltung ein durchaus um 5 Prozent oder mehr geringeres Gewicht auf. Die Querschnittsfläche in den Schenkeln eines Vergleichskettengliedes gemäß DE 103 48 491 B3 ist ausgelegt, um den dynamischen Belastungen bei einem Förderbetrieb bei einer Verwendung einer solchen Kette als Fördererkette Stand zu halten. Durch die besondere Auslegung der Schenkel des erfindungsgemäßen Kettengliedes ist es möglich, diese zuvor bereits soweit wie möglich reduzierte Querschnittsfläche in den Schenkeln weiter zu reduzieren. Diese Maßnahme erfolgt entgegen der herrschenden Lehre, dass man bei derartigen Ketten eine gewisse Mindestquerschnittsfläche in den Schenkeln haben müsse, um den beim Betrieb auftretenden dynamischen Belastungen bei Wechselbeanspruchungen Stand halten zu können. Bei dem erfindungsgemäßen Kettenglied sind die Schenkel entgegen ihrer elastischen Deformationsrichtung und somit in Richtung der Breite des Kettengliedes durch den Stützgurt quasi vorgespannt. Wird ein solches Kettenglied bei einer Zugkette, wie etwa bei einer Fördererkette für Bergbauanwendungen eingesetzt, ist der Stützgurt ausgelegt, damit der Abstand seiner Stützgurtabschnitte von den bogenseitigen Enden zur Schenkelmitte hin abnimmt. Dann ist der Grad einer mit einer Zugbelastung einhergehenden Einschnürung durch die Stützstruktur reduziert. Je geringer der Betrag der elastischen Einschnürung in den Schenkeln ist, je geringer ist die bei einem bestimmungsgemäßen Betrieb des Kettengliedes von den Schenkeln, insbesondere in Folge von wechselnden Zugbeanspruchungen auszuführende Bewegung, was wiederum die Dauerschwingfestigkeit verbessert. Somit ist durch diese Auslegung der Schenkel trotz Querschnittsflächenreduzierung die Dauerschwingfestigkeit des Kettengliedes in seinen Schenkeln nicht herabgesetzt. Somit wurde mit diesem Kettenglied die herrschende Meinung, für die Dauerschwingfestigkeit eines einen bestimmten Nenndurchmesser aufweisenden Kettengliedes müsse, damit die Schenkel die bei Zugbelastungen auftretenden Einschnürungen dauerhaft Stand halt zu können, eine bestimmte Querschnittsfläche nicht unterschritten werden darf, überwunden. Durch die vorbeschriebene besondere Auslegung der Querschnittsschenkelgeometrie ist der Grad der Einschnürung durch die Doppel-T-Trägerstruktur mit ihrem Stützgurt wirksam entgegengewirkt. Entsprechendes gilt analog für ein auf Schub beanspruchtes Kettenglied, bei dem die Stützgurtabschnitte zur Schenkelmitte hin zu dem äußeren Gurt einen zunehmend größeren Abstand aufweisen.

In einer bevorzugten Anwendung eines solchen Kettengliedes ist dieses Teil einer Gliederkette für Zuganwendungen, wie etwa einer Fördererkette für Bergbauanwendungen, wobei die Vertikalglieder dieser Kette in der vorbeschriebenen Art und Weise ausgeführt sind. Typischerweise sind die zwei derartige Vertikalglieder verbindenden Horizontalkettenglieder als Runddrahtglieder ausgeführt.

Von Vorteil eines solchen Kettengliedes und insbesondere einer aus solchen Kettengliedern, zumindest als Vertikalglieder gefertigten Rundstahlgliederkette, wie beispielsweise einer Fördererkette für Bergbauanwendungen, ist, dass aufgrund des geringeren Gewichtes dieser Kettenglieder das Gesamtgewicht der Kette signifikant reduziert ist, verglichen mit einer herkömmlichen Stahlgliederkette. Dementsprechend ist die Totmasse, die bei einem Betrieb einer solchen Rundstahlgliederkette zu bewegen ist, entsprechend geringer. Gerade bei Bergbauanwendungen, bei denen Ketten mit einem großen Nenndurchmesser eingesetzt werden, beispielsweise Kettenglieder mit einem Nenndurchmesser von 60 mm oder größer ist dieses von Vorteil, da aufgrund der reduzierten zu bewegenden Totmasse bei gleicher Antriebsleistung entsprechend mehr Material - Abraum und/oder Kohle - gefördert werden kann. Aus diesem Grunde eignet sich eine mit derartigen Kettengliedern hergestellte Fördererkette vor allem für Bergbauanwendungen, bei denen die Strebe relativ lang sind, beispielsweise 300 oder 400 Meter oder länger. In einem Streb beträgt die Länge einer solchen Fördererkette etwa der doppelten Länge des Strebs. Typischerweise werden die Kratzer mittig mit einer Doppelkette gezogen, so dass durch den Antrieb insgesamt zwei Fördererketten jeweils mit etwa der doppelten Streblänge angetrieben werden. Aufgrund der Länge einer solchen Fördererkette macht sich bereits eine geringe Gewichtsreduktion in den Vertikalkettengliedern in Bezug auf die Leistungsfähigkeit eines solchen Kratzerförderers zum Bewegen von Abraum oder Kohle signifikant bemerkbar. Eine weitere Leistungssteigung lässt sich erzielen, wenn auch die Horizontalglieder Schenkel aufweisen, die nach dem vorbeschriebenen Konzept ausgelegt sind.

Die Querschnittsprofilierung der Schenkel in der vorbeschriebenen Art und Weise verbessert zudem die Durchhärtbarkeit der Kettenglieder. Derartige Kettenglieder werden warm geschmiedet und nach dem Schmieden durch Abschrecken gehärtet. Hergestellt werden derartige Kettenglieder typischerweise aus einem Stahlwerkstoff. Um das gewünschte Gefüge beim Härten einstellen zu können, ist es erforderlich, dass Abkühlung entsprechend rasch erfolgt. Problematisch ist allerdings, dass bei dickeren Kettengliedern die Gefahr besteht, dass die Zentralbereiche bezogen auf die Querschnittsgeometrie nicht rasch genug abgekühlt werden können, um das gewünschte gehärtete Gefüge ausbilden zu können. Durch die Konzeption der Schenkel nach Art eines Doppel-T-Trägers ist durch die darin vorhandenen Taschen, durch den die Breite des inneren Gurtes durchaus um 50 % oder mehr reduziert sein kann, zugleich Vorsorge dafür getroffen, dass beim Härten des Kettengliedes auch die Zentralbereiche der Schenkel bestimmungsgemäß gehärtet werden können und damit deren Durchhärtbarkeit verbessert ist. Dieses ist von Vorteil, da die gleichmäßige Durchhärtbarkeit der Schenkel die Möglichkeit eröffnet, diese mit einer entsprechend geringeren Querschnittsfläche auszulegen.

Durch die Doppel-T-Trägerstrukturierung der Schenkel ist, wie bereits vorstehend aufgezeigt, das Maß einer Einschnürung bei einer Zugbelastung gegenüber herkömmlichen Kettengliedern verringert. Dieses ist gerade bei Rundstahlgliederketten, wie etwa Fördererketten, die derartige Kettenglieder, beispielsweise als Vertikalglieder verwenden, vorteilhaft. Trotz großer Länge einer solchen Rundstahlgliederkette ist ihre durch das Einschnüren bedingte Elastizität und die damit verbundene Längenänderung reduziert, wodurch eine Kontrolle der Kette verbessert ist.

Die Doppel-T-Trägerstruktur der Schenkel erstreckt sich typischerweise über die gesamte Länge der Schenkel. Dabei kann vorgesehen sein, dass ein Strukturübergangsbereich bereits in einem an die Schenkel grenzenden Bogenabschnitt angeordnet ist, so dass die vollständige Breite der Gurte bereits am bogenseitigen Ende des Schenkels voll ausgebildet sind.

Die Breite der Gurte ist über die Längserstreckung der Schenkel typischerweise konstant.

In einer Weiterbildung ist vorgesehen, dass die Schenkel eine größere maximale Breite aufweisen als die mittleren Bereiche der Bögen, welche Bereiche den Nenndurchmesser des Kettengliedes definieren. Erreicht wird dieses durch eine die Breite des äußeren Gurtes vergrößernde Ausbauchung, die sich über die gesamte Schenkellänge bis in einen sich an den Schenkel anschließenden Übergangsbogenabschnitt hinein erstreckt. Aufgrund einer solchen Ausbauchung, die zur Mittellängsebene des Kettengliedes symmetrisch auf beiden Seiten eines Schenkels ausgeführt ist, weist der äußere Gurt eine größere Breite auf als der innere Gurt bzw. seine beiden inneren Gurtabschnitte.

Die Schenkelhöhe ist typischerweise über die gesamte Länge der Schenkel konstant. Dieses schließt nicht aus, dass innenseitig an zumindest einem Schenkel ein Teilungsnocken angeformt ist. Dieser erstreckt sich nur über einen Teil der Länge des Schenkels. Dieser trägt daher zur mechanischen Belastbarkeit des Schenkels nicht bei. Fördererketten weisen mitunter derartige Teilungsnocken in ihren Vertikalgliedern auf, um den Bewegungsbereich des Kettengliedes in zwei bogenseitige Bewegungsbereiche zu teilen. Die verbliebene Öffnungsweite des Kettengliedes im Bereich eines solchen Teilungsnockens ist geringer als der Nenndurchmesser eines in dieses Kettenglied eingehängten Kettengliedes. Gemäß einer möglichen Ausgestaltung trägt jeder Schenkel an seiner in das Kettengliedinnere weisenden Seite einen solchen Teilungsnocken. Auf diese Weise ist wirksam einer Verklankung vorgebeugt.

Die vorbeschriebenen Vorteile vor allem hinsichtlich einer Gewichtseinsparung ergeben sich auch, wenn die beiden Schenkel durch einen Mittensteg miteinander verbunden sind.

Die zu den Seitenflächen des Kettengliedes hin weisenden Konturen der Doppel-T-Trägerstrukturierung sind vorzugsweise zum Reduzieren einer Kerbwirkung gerundet ausgeführt. Besonders zweckmäßig ist eine Ausgestaltung, bei der die Rundungen in Richtung zu einem Scheitel oder einen Wendepunkt der Rundung hin mit zunehmend kleinerem Radius ausgeführt sind, da damit der Einfluss von Kerbwirkungen nochmals deutlich reduziert werden kann. Vorzugsweise gehen sämtliche Rundungen ineinander über ohne gerade, ungekrümmte Zwischenabschnitte vorzusehen.

In einer bevorzugten Weiterbildung ist vorgesehen, dass jeweils ein Übergangsabschnitt zwischen den Schenkelabschnitten mit der Doppel-T-Trägerstruktur und den benachbarten Abschnitten des Kettengliedes vorgesehen ist, in dem die Ausprägung der Doppel-T-Trägerstruktur in Richtung zu den benachbarten Kettengliedabschnitten ohne Doppel-T-Trägerstruktur sukzessive, nicht linear geringer wird, wobei in einer Seitenansicht die Sohle der durch die Doppel-T-Trägerstruktur in jede Schenkelseite eingebrachten Tasche mit zunehmendem Krümmungsradius gekrümmt ausläuft.

Bei diesem Kettenglied ist in Bezug auf die Doppel-T-Trägerstruktur vorgesehen, dass die Sohle bzw. der Sohlenbereich der zwischen dem äußeren Gurt und dem inneren Gurt jeweils befindlichen Tasche mit zunehmend kleinerem Radius und damit nach Art einer Ellipse in dem Übergangsabschnitt ausläuft.

Diese Auslegung des Übergangsabschnittes trägt Sorge dafür, dass die in Längsrichtung weisenden Enden zwischen den beiden Gurten der Doppel-T-Trägerstruktur befindlichen Taschen nicht durch Kerbspannungen geschwächt werden. Erreicht wird dieses dadurch, dass in dem jeweiligen Übergangsabschnitt die Ausprägung der Doppel-T-Trägerstruktur in Richtung zu dem jeweils benachbarten Kettengliedabschnitt sukzessiv geringer wird, und zwar entlang einer nicht-linearen Veränderung. Diese Veränderung erfolgt somit entlang einer gekrümmten Bahn. Auf diese Weise erfolgt eine organische Aufteilung der über die Gurte geleiteten Zug- und Schubkräfte, die bei einer Belastung ein solches Kettenglied auszuhalten hat.

Nachfolgend ist die Erfindung anhand eines Ausführungsbeispiels unter Bezugnahme auf die beigefügten Figuren beschrieben. Es zeigen:
- **Fig. 1:**: Eine perspektivische Ansicht eines zur Verwendung in einer Fördererkette ausgelegten erfindungsgemäßen Kettengliedes,
- **Fig. 2:**: eine Seitenansicht des Kettengliedes der Figur 1,
- **Fig. 3a** - **3d:**: Schnittdarstellungen des Kettengliedes der Figur 2 entlang den Schnittlinien A - A (Figur 3a), B - B (Figur 3b), C - C (Figur 3c) und D - D (Figur 3d) und
- **Fig. 4:**: eine Seitenansicht eines weiteren erfindungsgemäßen Kettengliedes.

Ein als Vertikalglied vorgesehenes Kettenglied 1 für eine Fördererkette für Bergbauanwendungen, etwa als Kettenkraterförderer umfasst zwei Bögen 2, 3, die endseitig durch jeweils einen Schenkel 4, 5 miteinander verbunden sind. Die Bögen 2, 3 sind identisch aufgebaut. Gleiches gilt für Schenkel 4, 5. Die nachfolgenden Ausführungen zu dem Bogen 2 gelten somit gleichermaßen für den Bogen 3. Die nachstehenden Ausführungen zu dem Schenkel 4 gelten gleichermaßen für den Schenkel 5.

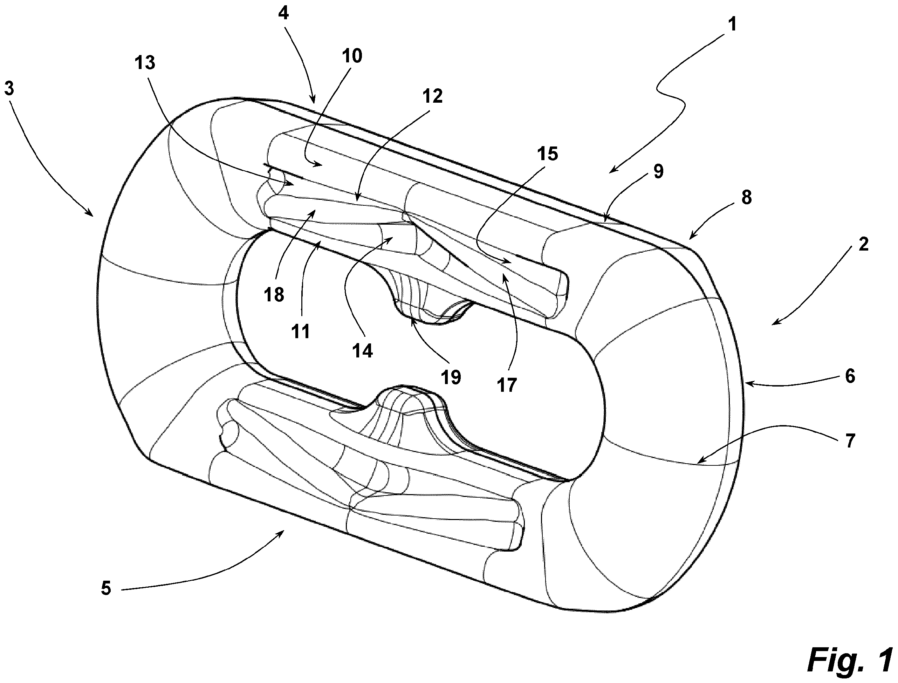

Der Bogen 2 verfügt über einen mittleren Bogenabschnitt 6, der sich ausgehend von der Mittellängsebene 7 des Kettengliedes 1 zu beiden Seiten über etwa 60 Grad erstreckt. Dieser Bogenabschnitt 6 ist bei dem dargestellten Ausführungsbeispiel mit konstanter Querschnittsfläche und konstanter Querschnittsgeometrie ausgeführt. Bei dem dargestellten Ausführungsbeispiel ist die Querschnittsgeometrie in dem Bogenabschnitt 6 kreisförmig. An diesem mittleren Bogenabschnitt 6 schließt sich ein Übergangsbogenabschnitt 8 an, dessen von dem Bogenabschnitt 6 wegweisendes Ende an den Schenkel 4 grenzt. Das diesbezügliche Ende des Übergangsbogenabschnittes 8 ist in Figur 1 an der oberen Bogenhälfte des Bogens 3 mit dem Bezugszeichen 9 kenntlich gemacht. Der Übergangsbogenabschnitt 8 dient als Übergangsabschnitt von der besonderen Querschnittsgeometrie der Schenkel 4, 5 in den mittleren Bogenabschnitt 6, der typischerweise eine runde Querschnittsgeometrie aufweist. Die Querschnittsfläche im Bereich der Schenke 4, 5 ist kleiner als in dem mittleren Bogenabschnitt 6 und beträgt bei dem dargestellten Ausführungsbeispiel etwa 72 Prozent der Querschnittsfläche des Bogenabschnittes 6.

Die Querschnittsgeometrie des Schenkels 4 - dieselben Ausführungen gelten gleichermaßen für den Schenkel 5 - ist nach Art eines Doppel-T-Trägers ausgelegt. Diese Strukturierung umfasst einen äußeren Gurt 10, einen inneren Gurt 11 sowie einen zwischen diesen beiden Gurten 10, 11 befindlichen Stützgurt 12. Zwischen den Gurt, 10, 12, 11 befinden sich Taschen 13, 14, 15. Damit weist das Kettenglied im Bereich der Taschen 13, 14, 15 eine reduzierte Breite auf. Durch die Taschen 13, 14, 15 ist die Doppel-T-Trägerstrukturierung herausgearbeitet. Der äußere Gurt 10 ist mit dem inneren Gurt 11 durch einen Steg 16 verbunden. Der Stützgurt 12 stellt eine Ausbauchung in dem Steg 16 dar. Der Stützgurt 12, ist wie in Figur 1 erkennbar, in zwei Stützgurtabschnitte 17, 18 unterteilt, die gegensinnig zueinander geeignet sind und im Bereich der Schenkelmitte ineinander sowie bei dem dargestellten Ausführungsbeispiel auch in den äußeren Gurt 10 übergehen. Durch diese Auslegung der Stützgurtabschnitte 17, 18 verringert sich der jeweilige Abstand des Stützgurtes 12 ausgehend von dem bogenseitigen Ende des Schenkels 4 in Richtung zur Schenkelmitte hin.

An die zum Kettengliedinneren weisenden Seite des Schenkels 4 ist ein Teilungsnocken 19 angeformt. Durch die Teilungsnocken 19 der beiden Schenkel 4, 5 ist das Kettengliedinnere in zwei bogenseitige Bewegungsbereiche unterteilt. In jeden dieser Bewegungsbereich ist zum Ausbilden einer Gliederkette ein Kettenglied eingehängt, welches an den Bögen 2, 3 scharnieren kann.

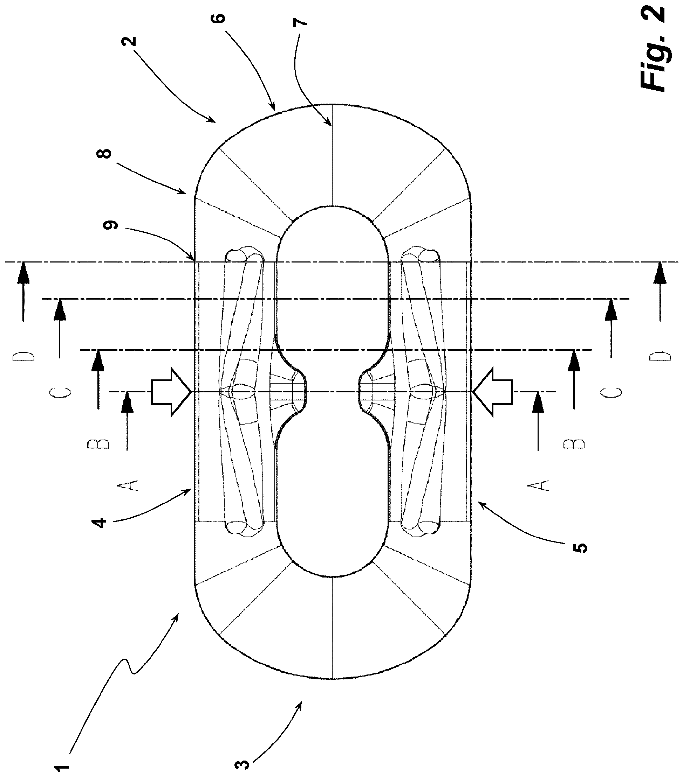

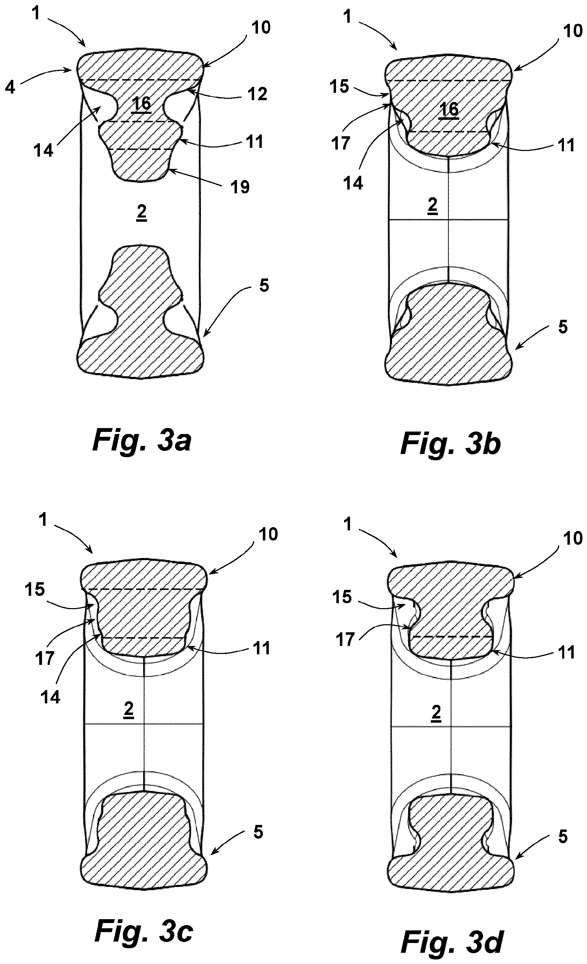

Die Ausbildung der Doppel-T-Trägerstrukturierung der Schenkel 4, 5 kann auch den Querschnittsdarstellungen der Figuren 3a bis 3d entnommen werden. In Figur 2 ist die Lage der Schnittdarstellung der Figuren 3a bis 3d eingezeichnet. Die Schnittdarstellung der Figur 3a zeigt einen Schnitt des Kettengliedes 1 im Bereich seiner Schenkelmitte. Die Einzelelemente der Doppel-T-Trägerstrukturierung des Schenkels 4 sind durch gestrichelte Linien zur besseren Visualisierung voneinander getrennt. Der äußere Gurt 10 ist durch den Steg 16 mit dem inneren Gurt 11 verbunden. In der Schenkelmitte ist der Stützgurt 12 an den äußeren Gurt 10 angeformt bzw. geht in diesen über. Durch diesen ist in der Schenkelmitte somit die in Figur 3a erkennbare Höhe des äußeren Gurtes vergrößert, und zwar etwa um die Hälfte der diesbezüglichen Höhe des Stützgurtes 12.

Bei dem dargestellten Ausführungsbeispiel weist der äußere Gurt 10 gegenüber der Breite der Bögen 2, 3 in derselben Richtung eine größere Breite und somit eine Ausbauchung auf. Die Breite des inneren Gurtes 11 ist hingegen geringer als die diesbezügliche Breitenerstreckung der Bögen 2, 3.

In dem Schnitt der Figur 3b, der mit geringem Abstand zur Schenkelmitte hin und somit zum Schnitt der Figur 3a angeordnet ist, wird bereits die formliche Trennung des äußeren Gurtes von dem Stützgurtabschnitt 17 des Stützgurtes 12 erkennbar. In Richtung zum Schenkelende hin wandert der Stützgurtabschnitt 17 zunehmend weiter in Richtung zu dem inneren Gurt 11 hin, wie durch die Schnittdarstellungen der Figuren 3c und 3d deutlich gemacht.

Aufgrund der unterschiedlichen Breite des äußeren Gurtes 10 und des inneren Gurtes 11 vergrößert sich die Breite des Stützgurtes 12 bzw. seiner Stützgurtabschnitte, 17, 18 ausgehend von dem Schenkelende hin (siehe Schnittdarstellung der Figur 3d) in Richtung zur Schenkelmitte hin.

Zu beobachten ist zudem, dass der innere Gurt 11 ausgehend von seinem jeweiligen Schenkelende in Richtung zur Schenkelmitte hin etwas bezüglich seines Abstandes zu dem äußeren Gurt 10 abnimmt.

Durch diese besondere Strukturierung der in Richtung der Breite des Kettengliedes 1 sich erstreckenden Strukturierung sind die Schenkel 4, 5 des Kettengliedes 1 gegenüber einem Einschnüren vorgespannt. Grund hierfür ist nicht nur die Doppel-T-Trägerstrukturierung, sondern insbesondere auch der zwischen den beiden Gurten 10, 11 angeordnete Stützgurt 12 mit seinem Stützgurtabschnitten 17, 18 verantwortlich. Die Schenkel 4, 5 sind auf diese Weise nach Art eines Fachwerkträgers konzipiert. In Figur 2 ist eine solche bei einer Zugbelastung eintretende auf die Schenkel 4, 5 wirkende Kraft durch Blockpfeile kenntlich gemacht.

Die Schnittdarstellungen zeigen zudem, dass die Doppel-T-Trägerstrukturierung der Schenkel 4, 5 zu den Seitenflächen des Kettengliedes 1 hin ausschließlich gerundete Strukturen aufweist. In Richtung zu einem Scheitel oder einem Wendepunkt dieser gerundeten Kontur hin ist diese mit einem zunehmend geringer werdenden Radius ausgeführt.

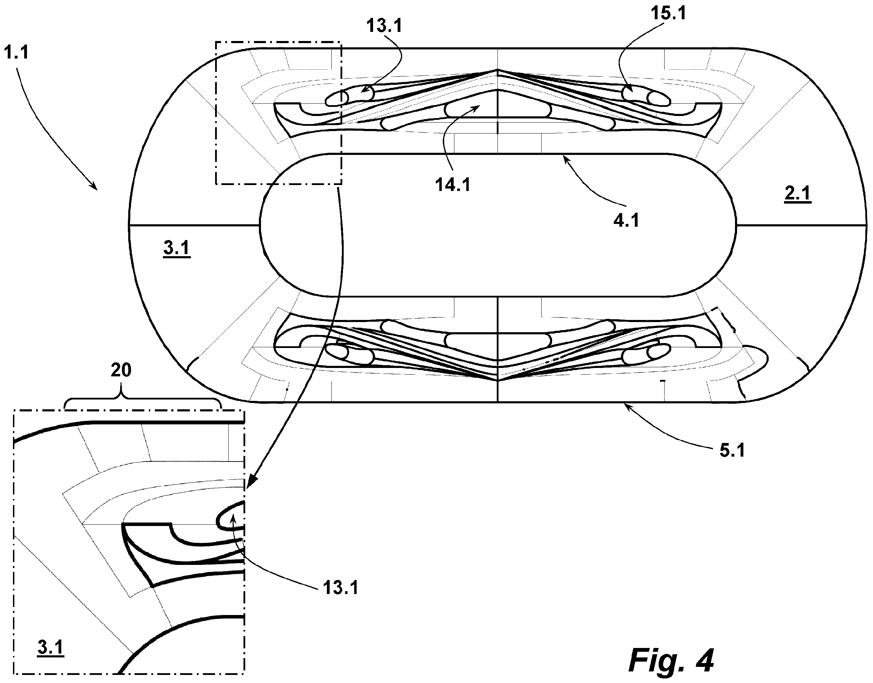

Figur 4 zeigt ein weiteres erfindungsgemäßes Kettenglied 1.1, welches genauso aufgebaut ist wie das Kettenglied 1 der vorstehenden Figuren. Daher gelten die Ausführungen zu dem Kettenglied 1 gleichermaßen für das Kettenglied 1.1. Aus diesem Grunde sind gleiche Merkmale bei dem Kettenglied 1.1 mit demselben Bezugszeichen, ergänzt um den Suffix ".1", kenntlich gemacht. Das Kettenglied 1.1 unterscheidet sich von dem Kettenglied 1 durch die besondere Auslegung der in Längserstreckung der Schenkel 4.1, 5.1 endenden Taschen 13.1, 14.1, 15.1 in den beiden Schenkeln 4.1, 5.1. Die Taschen 13.1, 15.1 laufen in einem Übergangsabschnitt 20 aus. Dieser Übergangsabschnitt 20 befindet sich zwischen den Schenkelabschnitten mit der Doppel-T-Trägerstruktur und den benachbarten Abschnitten des Kettengliedes 1.1 ohne eine solche Doppel-T-Trägerstruktur. Bei den Taschen 13.1, 15.1 ist dieses der Bereich des Überganges der Schenkel 4.1, 5.1 in die angrenzenden Bögen 2.1, 3.1. In diesen Übergangsabschnitten 20 wird die Ausprägung der Taschentiefe und Taschenweite sukzessive, nicht linear in Richtung zu den angrenzenden Bögen geringer. In einer Seitenansicht läuft die Sohle mit zunehmendem Krümmungsradius aus. Gleiches gilt für die Weite der Taschen 15, 15.1 bei dem dargestellten Ausführungsbeispiel.

Auch die zueinander weisenden Enden der Taschen 13.1, 15.1 sind nach diesem Konzept ausgeführt. Gleiches gilt ebenfalls für die Tasche 14.1, die an ihren beiden zu den Bögen 2.1, 3.1 weisenden Enden in gleicher Weise nicht linear mit zunehmendem Krümmungsradius ausläuft. Durch diese Maßnahmen wird die Belastbarkeit des Kettengliedes deutlich erhöht, da der Entstehung einer Kerbwirkung in den in Längsrichtung weisenden Taschenenden durch diese Maßnahme wirksam entgegengewirkt ist.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten diese umzusetzen, ohne dass dies im Rahmen dieser Ausführungen im Einzelnen näher erläutert werden müsste.

### Bezugszeichenliste

- 1, 1.1: Kettenglied
- 2, 2.1: Bogen
- 3, 3.1: Bogen
- 4, 4.1: Schenkel
- 5, 5.1: Schenkel
- 6: mittlerer Bogenabschnitt
- 7: Mittellängsebene
- 8: Übergangsbogenabschnitt
- 9: Ende
- 10: äußerer Gurt
- 11: innerer Gurt
- 12: Stützgurt
- 13, 13.1: Tasche
- 14, 14.1: Tasche
- 15, 15.1: Tasche
- 16: Steg
- 17: Stützgurtabschnitt
- 18: Stützgurtabschnitt
- 19: Teilungsnocken
- 20: Übergangsabschnitt

## Patentansprüche

1. Kettenglied mit zwei an ihren Enden (9) durch jeweils einen Bogen (2, 3) verbundenen Schenkeln (4, 5), wobei die innere Länge des Kettengliedes (1) ausgelegt ist, damit darin scharnierend an jedem Bogen (2, 3) ein weiteres Kettenglied eingehängt werden kann, wobei die Schenkel (4, 5) eine nach Art eines Doppel-T-Trägers ausgebildete Querschnittsgeometrie mit einem äußeren Gurt (10), einem inneren Gurt (11) und einem die Gurte (10, 11) verbindenden Steg (16) aufweisen, wobei die Höhe dieser Doppel-T-Trägerstruktur in Richtung der Breite des Kettengliedes (1) ausgerichtet ist, **dadurch gekennzeichnet, dass** die Schenkel (4, 5) eine geringere Querschnittsfläche aufweisen als die Querschnittsfläche im Bereich der Bögen (2, 3), und dass zwischen den beiden Gurten (10 11) ein Stützgurt (12) vorgesehen ist, dessen Abstand zu dem äußeren Gurt (10), ausgehend von seinem zu einem Bogen (2, 3) weisenden Ende, zur Schenkelmitte hin durch eine geneigte Anordnung abnimmt oder zunimmt und dieser somit zwei gegensinnig zueinander geneigte Stützgurtabschnitte (17, 18) aufweist.

2. Kettenglied nach Anspruch 1, **dadurch gekennzeichnet, dass** sich die Doppel-T-Trägerstruktur über die gesamte Länge der Schenkel (4, 5) erstreckt.

3. Kettenglied nach einem der Ansprüche 1 oder 2, **dadurch gekennzeichnet, dass** die Schenkelhöhe über die Schenkellänge mit Ausnahme eines gegebenenfalls innenseitig daran angeformten Teilungsnockens (19) konstant ist.

4. Kettenglied nach einem der Ansprüche 1 bis 3, **dadurch gekennzeichnet, dass** der Abstand des Stützgurtes (12) in Richtung zur Schenkelmitte hin zu dem äußeren Gurt (10) abnimmt.

5. Kettenglied nach Anspruch 4, **dadurch gekennzeichnet, dass** zumindest ein Schenkel (4, 5) mittig einen in das Kettengliedinnere vorspringenden Teilungsnocken (19) zum Trennen der bogenseitigen Bewegungsbereiche voneinander aufweist.

6. Kettenglied nach einem der Ansprüche 1 bis 5, **dadurch gekennzeichnet, dass** die Breite des äußeren Gurtes (10) sowie die Breite des inneren Gurtes über die Längserstreckung der Schenkel (4, 5) konstant ist.

7. Kettenglied nach einem der Ansprüche 1 bis 6, **dadurch gekennzeichnet, dass** der Stützgurt (12) im Bereich der Schenkelmitte in den äußeren Gurt (10) über geht.

8. Kettenglied nach Anspruch 7, **dadurch gekennzeichnet, dass** die Stützgurtabschnitte (17, 18) mit ihren bogenseitigen Enden in den inneren Gurt (11) über gehen.

9. Kettenglied nach Anspruch 8, **dadurch gekennzeichnet, dass** die zwischen dem Stützgurt (12) und dem äußeren Gurt (10) sowie zwischen dem Stützgurt (12) und dem inneren Gurt (11) befindlichen Taschen (13, 14,15) jeweils in Richtung zu dem Bereich des größten Abstandes hinsichtlich ihrer Tiefe zunehmen.

10. Kettenglied nach einem der Ansprüche 1 bis 9, **dadurch gekennzeichnet, dass** die zu den Seiten des Kettengliedes (1) weisenden Konturen des äußeren Gurtes (10), des inneren Gurtes (11) und des zwischen diesen Gurten befindlichen Stützgurtes (12) sowie die Übergänge gerundet ausgeführt sind.

11. Kettenglied nach Anspruch 10, **dadurch gekennzeichnet, dass** die Rundungen in Richtung zu einem Scheitel oder zu einem Wendepunkt einer Krümmung hin mit zunehmend kleinerem Radius ausgeführt sind.

12. Kettenglied nach einem der Ansprüche 1 bis 11, **dadurch gekennzeichnet**, und dass jeweils ein Übergangsabschnitt (20) zwischen den Schenkelabschnitten mit der Doppel-T-Trägerstruktur und den benachbarten Abschnitten des Kettengliedes (1.1) vorgesehen ist, in dem die Ausprägung der Doppel-T-Trägerstruktur in Richtung zu den benachbarten Kettengliedabschnitten ohne Doppel-T-Trägerstruktur sukzessive, nicht linear geringer wird, wobei in einer Seitenansicht die Sohle der durch die Doppel-T-Trägerstruktur in jede Schenkelseite eingebrachten Tasche (13.1, 14.1, 15.1) mit zunehmendem Krümmungsradius gekrümmt ausläuft.

13. Kettenglied nach Anspruch 12, **dadurch gekennzeichnet, dass** der Übergangsabschnitt (20) der auslaufenden Doppel-T-Trägerstruktur sich über den Übergang zwischen Schenkel (4.1, 5.1) und Bogen (2.1, 3.1) erstreckt, sodass ein erster Teil des Übergangsabschnittes (20) im Schenkel (4.1, 5.1) und ein zweiter Teil des Übergangsabschnittes (20) im jeweiligen Bogen (2.1, 3.1) angeordnet sind.

14. Kettenglied nach einem der Ansprüche 1 bis 13, **dadurch gekennzeichnet, dass** die äußeren Gurte der Schenkel gegenüber der Breite der Bögen ausgebaucht sind, welche Ausbauchung sich bis in einen sich an einen mittleren Bogenabschnitt anschließenden Übergangsbogenabschnitt hinein erstreckt.

15. Kettenglied nach einem der Ansprüche 1 bis 14, **dadurch gekennzeichnet, dass** das Kettenglied aus einem Stahlwerkstoff hergestellt ist.

## Claims

1. Chain link, with two limbs (4, 5) at its end (9), connected in each case by a bow (2, 3), wherein the inner length of the chain link (1) is configured in such a way that a further chain link can be suspended from it, hinging on each bow (2, 3), wherein the limbs (4, 5) have a cross-section geometry in the form of a double-T carrier, with an outer belt (10), an inner belt (11), and a web (16) connecting the belts (10, 11), wherein the height of this double-T carrier structure is aligned in the direction of the width of the chain link (1), **characterised in that** the limbs (4, 5) have a smaller cross-section surface than the cross-section surface in the region of the bow (2, 3), and that a support belt (12) is provided between the two belts (10, 11), the spacing interval of which to the outer belt (10), starting from its end facing towards a bow (2, 3), decreases or increases towards the middle of the limb by way of an inclined arrangement, and it therefore comprises two support belt sections (17, 18) inclined in opposite directions to one another.

2. Chain link according to claim 1, **characterised in that** the double-T carrier structure extends over the entire length of the limb (4, 5).

3. Chain link according to any one of claims 1 or 2, **characterised in that** the limb height is constant over the length of the limb, with the exception of a dividing cam (19) which may be formed on the inner side.

4. Chain link according to any one of claims 1 to 3, **characterised in that** the spacing interval of the support belt (12), in the direction towards the middle of the limb, decreases towards the outer belt (10).

5. Chain link according to claim 4, **characterised in that** at least one limb (4, 5) comprises a dividing cam (19), projecting in the middle into the interior of the chain link, for dividing the bow-side movement regions from one another.

6. Chain link according to any one of claims 1 to 5, **characterised in that** the width of the outer belt (10) and the width of the inner belt are constant over the longitudinal extension of the limbs (4, 5).

7. Chain link according to any one of claims 1 to 6, **characterised in that** the support belt (12) passes into the outer belt (10) in the region of the middle of the limb.

8. Chain link according to claim 7, **characterised in that** the support belt sections (17, 18) passes into the inner belt (11) with their bow-side ends.

9. Chain link according to claim 8, **characterised in that** the pockets (13, 14, 15), located between the support belt (12) and the outer belt (10) and between the support belt (12) and the inner belt (11), increase in respect of their depth in each case in the direction towards the region of the greatest spacing interval.

10. Chain link according to any one of claims 1 to 9, **characterised in that** the contours, facing towards the sides of the chain link (1), of the outer belt (10), of the inner belt (11), and of the support belt (12) located between these belts, and the transition regions, are configured as rounded.

11. Chain link according to claim 10, **characterised in that** the rounded regions are configured with increasingly smaller radii in the direction towards an apex or towards a turning point of a curvature region.

12. Chain link according to any one of claims 1 to 11, **characterised in that** a transition section (20) is provided in each case between the limb sections with the double-T carrier structure and the adjacent sections of the chain link (1.1), in which the shaping of the double-T carrier structure in the direction towards the adjacent chain link sections without a double-T structure becomes successively smaller in a non-linear fashion, wherein, in a side view, the sole of the pocket (13.1, 14.1, 15.1), introduced through the double-T carrier structure into each limb side, runs out in a curve with an increasing curvature radius.

13. Chain link according to claim 12, **characterised in that** the transition section (20) of the double-T structure, running out, extends over the transition section between the limbs (4.1, 5.1) and the bow (2.1, 3.1), such that a first part of the transition section (20) is arranged in the limb (4.1, 5.1), and a second section of the transition section (20) is arranged in the respective bow (2.1, 3.1).

14. Chain link according to any one of claims 1 to 13, **characterised in that** the outer belts of the limbs are bowed out in relation to the width of the bows, this bowing outwards arrangement extending as far as into a transition bow section connecting to a middle bow section.

15. Chain link according to any one of claims 1 to 14, **characterised in that** the chain link is made of a steel material.

## Revendications

1. Maillon de chaîne comportant deux fûts (4, 5) reliés à leurs extrémités (9) par un arc (2, 3), la longueur intérieure du maillon de chaîne (1) étant conformée de manière à pouvoir accrocher un maillon de chaîne supplémentaire à la façon d'une charnière à l'intérieur de chaque arc (2, 3), les fûts (4, 5) présentant une géométrie de section conformée à la manière d'un porteur en double T, avec une membrure extérieure (10), une membrure intérieure (11) et une âme (16) reliant les membrures (10, 11), la hauteur de cette structure à porteur en double T étant orientée dans le sens de la largeur du maillon de chaîne (1), **caractérisé en ce que** les fûts (4, 5) présentent une surface de section transversale plus faible que la surface de section transversale au niveau des arcs (2, 3), et **en ce qu'**il est prévu, entre les deux membrures (10, 11), une membrure d'appui (12), dont l'écartement par rapport à la membrure extérieure (10), quand on part de son extrémité orientée vers un arc (2, 3) pour arriver au milieu du fût, diminue ou augmente grâce à un agencement incliné et que celle-ci présente par conséquent deux tronçons de semelle d'appui (17, 18) inclinés dans un sens opposé l'un par rapport à l'autre.

2. Maillon de chaîne selon la revendication 1, **caractérisé en ce que** la structure à porteur en double T s'étend sur toute la longueur des fûts (4, 5).

3. Maillon de chaîne selon l'une des revendications 1 ou 2, **caractérisé en ce que** la hauteur de fût est constante sur la longueur du fût, à l'exception d'un taquet séparateur (19) qui est éventuellement moulé par l'intérieur sur celui-ci.

4. Maillon de chaîne selon l'une des revendications 1 à 3, **caractérisé en ce que** l'écartement entre la membrure d'appui (12) et la membrure extérieure (10) diminue en direction du milieu du fût.

5. Maillon de chaîne selon la revendication 4, **caractérisé en ce qu'**au moins un fût (4, 5) présente en son milieu un taquet séparateur (19) en saillie vers l'intérieur du maillon de chaîne, afin de séparer l'une de l'autre les zones de jeu de mouvement du côté des arcs.

6. Maillon de chaîne selon l'une des revendications 1 à 5, **caractérisé en ce que** la largeur de la membrure extérieure (10) ainsi que la largeur de la membrure intérieure est constante sur toute l'étendue longitudinale des fûts (4, 5).

7. Maillon de chaîne selon l'une des revendications 1 à 6, **caractérisé en ce que** la membrure d'appui (12) se poursuit au niveau du milieu du fût vers la membrure extérieure (10).

8. Maillon de chaîne selon la revendication 7, **caractérisé en ce que** les tronçons de membrure d'appui (17, 18), au niveau de leurs extrémités côté arcs, se poursuivent vers la membrure intérieure (11).

9. Maillon de chaîne selon la revendication 8, **caractérisé en ce que** les poches (13, 14, 15) situées entre la membrure d'appui (12) et la membrure extérieure (10) ainsi qu'entre la membrure d'appui (12) et la membrure intérieure (11) augmentent en ce qui concerne leur profondeur dans le sens de la zone avec le plus grand écartement.

10. Maillon de chaîne selon l'une des revendications 1 à 9, **caractérisé en ce que** les contours de la membrure extérieure (10) orientés vers les côtés du maillon de chaîne (1), les contours de la membrure intérieure (11) et de la membrure d'appui (12), laquelle se trouve entre lesdites membrures, de même que les zones de transition sont conformés en arrondi.

11. Maillon de chaîne selon la revendication 10, **caractérisé en ce que** les arrondis en direction d'un sommet ou d'un point d'inflexion d'une courbure sont conformés avec un rayon de plus en plus petit.

12. Maillon de chaîne selon l'une des revendications 1 à 11, **caractérisé en ce qu'**un tronçon de transition (20) est prévu respectivement entre les tronçons de fûts avec une structure à porteur en double T et les tronçons voisins du maillon de chaîne (1.1), dans lequel la forme de la structure à porteur en double T se réduit progressivement de façon non linéaire en direction des tronçons de maillon de chaîne voisins sans structure à porteur en double T, la semelle de la poche (13.1, 14.1, 15.) aménagée dans chaque côté de fût, dans la structure à porteur en double T, se terminant, d'après une vue latérale, courbée avec un rayon de courbure de plus en plus grand.

13. Maillon de chaîne selon la revendication 12, **caractérisé en ce que** le tronçon de transition (20) de la structure à porteur en double T au niveau terminal, s'étend sur la transition entre les fûts (4.1,5.1) et les arcs (2.1, 3.1), de manière à ce qu'une première partie du tronçon de transition (20) est disposée dans le fût (4.1, 5.1) et qu'une seconde partie du tronçon de transition (20) est disposée dans l'arc (2.1, 3.1) en question.

14. Maillon de chaîne selon l'une des revendications 1 à 13, **caractérisé en ce que** les membrures extérieures des fûts sont bombés par rapport à la largeur des arcs, lesquels renflements s'étendent jusqu'à un tronçon d'arc de transition lequel prolonge un tronçon d'arc médian.

15. Maillon de chaîne selon l'une des revendications 1 à 14, **caractérisé en ce que** le maillon de chaîne est fabriqué dans un matériau en acier.
